# EUROPEAN PATENT SPECIFICATION

(11) **EP 2 025 546 B1**
(45) Date of publication and mention of the grant of the patent: **17.04.2013**
(21) Application number: 07114310.1
(22) Date of filing: 14.08.2007
(51) Int. Cl.: B60J 1/20

(54) **Sun screen assembly**
Sonnenschutzanordnung
Ensemble de store solaire

(43) Date of publication of application: 18.02.2009
(73) Proprietor: Inalfa Roof Systems Group B.V., 5804 AH Venray (NL)
(72) Inventor: Camps, Theodorus Wilhelmus, 5912 GP, Venlo (NL)
(74) Representative: Voncken, Bartholomeus Maria Ch.

(56) References cited:
- EP-A- 1 626 152
- DE-A1- 1 654 037
- DE-U1-202005 014 448
- DE-U1-202007 007 924
- FR-A- 2 779 475

## Description

The invention relates to a sun screen assembly comprising a stationary central axis mounted with its opposite ends in stationary mounts, a winding shaft for a sun screen rotatably mounted on said central axis and at least one spring member for loading the winding shaft in a direction for winding the sun screen thereon, which spring member with a first end is connected to the winding shaft and with its second end is connected to a non-rotating member.

Such an assembly is known from FR-A-2.779.475 in which the non-rotating member to which the spring member is connected, is defined by the central axis.

Such a sun screen assembly primarily finds its application in open roof constructions for vehicles. Generally the lateral edges of the sun screen will be guided in two guide rails positioned at opposite sides of a roof opening. For obtaining a proper side-guiding and sliding functionality of the sun screen the winding shaft needs to be centred correctly. In practice, using current fastening methods for known sun shade assemblies of the type referred to above this means that the winding shaft has to be centred with great precision during initial mounting thereof. This is a very time consuming process which has a negative impact on the total amount of time needed to install an open roof construction. Further, current fixing methods (for example using a pin-hole attachment at one end of the winding shaft and a slothole-screw fixing at the other end) only allow the winding shaft to move in a single longitudinal direction with respect to the stationary central axis. This means that in case of a thermal expansion of (parts of) the winding shaft, latter only can move in one direction, which results in a corresponding shift of the sun screen to a position in which it is no longer correctly centred. As a result a proper guiding functionality is not guaranteed any more.

It is an object of the present invention to provide an improved sun screen assembly of the type referred to above.

Thus, in accordance with the present invention the sun screen assembly is characterized in that two spring members and two non-rotating members are provided at opposite ends of the winding shaft, wherein the non-rotating members and the winding shaft in a limited way are movable in both longitudinal directions of the central axis.

As a result of the possibility of the non-rotating members and winding shaft to move in both longitudinal directions of the central axis the winding shaft always can assume a position in which the sun screen is perfectly centred and guided with respect to and by the guide rails.

In accordance with an embodiment of the sun screen assembly according to the present invention said limited movement of each non-rotating member is determined by a play between said non-rotating member and a stationary mount. Said stationary mount will be present at both non-rotating members, and thus together they determine the possible movement of the non-rotating members (and thus of winding shaft) in both longitudinal directions. When the sun screen assembly is part of an open roof construction for a vehicle, said stationary mounts will be part of (or will be rigidly connected to) a stationary roof part of the vehicle. For example said stationary mounts can be parts which also support the ends of the stationary central axis.

For allowing the non-rotating member to move relative to such a stationary mount yet to be non-rotating, it is possible that each stationary mount and non-rotating member cooperate through a pin and hole assembly. But also any other construction achieving this function may be applied.

For improving the functionality and obtaining a balanced situation, in accordance with yet another embodiment there are provided two diametrically positioned pin and hole assemblies. The number of such assemblies, however, may be increased if one expects high loads.

Finally, when the pin of each pin and hole assembly is part of the stationary mount and the hole of each pin and hole assembly is part of the non-rotating member the moving mass of the non-rotating members is minimized, thus enabling the sun screen assembly to move to its centred position easily and fast without the need for large forces (which would act on the edges of the sun screen cooperating with the guide rails which are rather fragile).

Hereinafter the invention will be elucidated while referring to the drawing, in which
Figure 1 shows schematically a longitudinal cross section of an embodiment of the sun screen assembly, and
Figure 2 shows on a larger scale and perspectively a non-rotating member and its cooperation with a stationary mount.

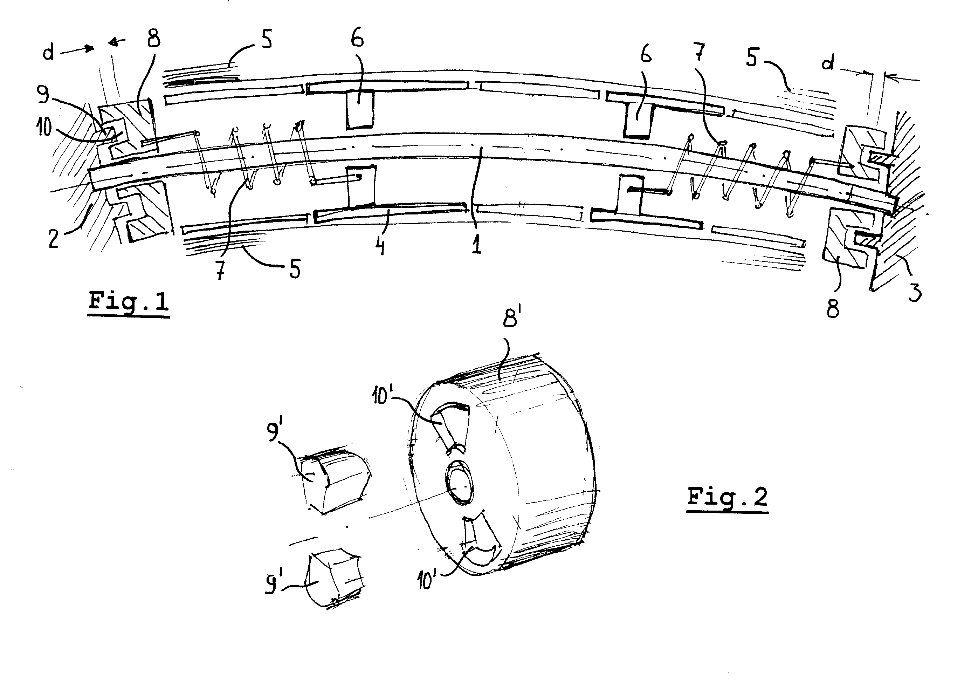

Referring firstly to figure 1 the sun screen assembly comprises a stationary central axis 1 mounted with its opposite ends in stationary mounts 2,3. A winding shaft 4 (which, in the present embodiment is a segmented winding shaft with successive tubular segments) for a sun screen 5 is rotatably mounted on said central axis 1 by means of bearings 6, which not only allow the winding shaft 4 to rotate around the stationary central axis 1, but also permit a longitudinal movement between the winding shaft 4 and central axis 1.

It is noted that, as is known per se, opposite lateral edges of the sun screen are guided by guide rails (not shown) which in the present illustration would extend perpendicularly to the plane of drawing.

Two spring member 7 are provided for loading the winding shaft 4 in a direction for winding the sun screen 5 thereon. Each spring member 7 is with a first end connected to the winding shaft 4 (in this embodiment indirectly through the bearing 6, but it could also occur directly) and with its second end to a non-rotating member 8.

In a limited way the non-rotating members 8 are movable in both longitudinal directions of the central axis 1. Basically said limited movement of each non-rotating member 8 may be determined by a play d between said non-rotating members 8 and the respective stationary mount 2. In figure 1 this play d is defined by two diametrically positioned pin and hole assemblies each comprising a pin 9 extending from the stationary mount 2 and a corresponding hole 10 for receiving said pin 9 in the non-rotating member 8. The play d then is the distance between the top of the pin 9 and the bottom of the hole 10. Alternatively, as illustrated for example in figure 2, the hole 10 does not have a bottom (but passes al the way through the non-rotating member) and in such a case the play could be determined by the distance between opposite facing sides of the stationary mount 2 and non-rotating member 8, or in any other convenient manner.

In figure 2 a non-rotating member 8' is illustrated having two diametrically positioned holes 10' for slideably receiving therein two pins 9' of a stationary mount (not illustrated here). As mentioned above, the holes 10' completely penetrate the non-rotating member 8' (which for this reason might be hollow).

The invention is not limited to the embodiments decribed before which may be varied widely within the scope of the invention as defined by the appending claims.

## Claims

1. Sun screen assembly comprising a stationary central axis (1) mounted with its opposite ends in stationary mounts (2, 3), a winding shaft (4) for a sun screen (5) rotatably mounted on said central axis and at least one spring member (7) for loading the winding shaft in a direction for winding the sun screen thereon, which spring member with a first end is connected to the winding shaft and with its second end is connected to a non-rotating member (8), **characterized in that** two spring members (7) and two non-rotating members (8) are provided at opposite ends of the winding shaft (4), wherein the non-rotating members and the winding shaft in a limited way are movable in both longitudinal directions of the central axis (1).

2. Sun screen assembly according to claim 1, wherein said limited movement of each non-rotating member (8) is determined by a play between said non-rotating member and a stationary mount (2, 3).

3. Sun screen assembly according to claim 2, wherein each stationary mount (2, 3) and non-rotating member (8) cooperate through a pin and hole assembly (9, 10).

4. Sun screen assembly according to claim 3, wherein there are provided two diametrically positioned pin and hole assemblies (9, 10).

5. Sun screen assembly according to claim 3 or 4, wherein the pin (9) of each pin and hole assembly is part of the stationary mount (2, 3) and the hole (10) of each pin and hole assembly is part of the non-rotating member (8).

## Patentansprüche

1. Sonnenschutzvorrichtung aufweisend eine stationäre Mittelachse (1), welche mit ihren gegenüberliegenden Enden in stationären Halterungen (2, 3) angebracht ist, eine Wickelwelle (4) für einen Sonnenschutz (5), welche auf der Mittelachse drehbar angebracht ist, und mindestens ein Federelement (7) zum Spannen der Wickelwelle in eine Richtung, um den Sonnenschutz darauf aufzuwickeln, welches Federelement mit einem ersten Ende mit der Wickelwelle verbunden ist und mit seinem zweiten Ende mit einem nicht-rotierenden Element (8) verbunden ist, **gekennzeichnet dadurch, dass** zwei Federelemente (7) und zwei nicht-rotierende Elemente (8) an gegenüberliegenden Enden der Wickelwelle (4) vorgesehen sind, wobei die nicht-rotierenden Elemente und die Wickelwelle in beide Längsrichtungen der Mittelachse (1) eingeschränkt bewegbar sind.

2. Sonnenschutzvorrichtung gemäß Anspruch 1, wobei die eingeschränkte Bewegung eines jeden nicht-rotierenden Elementes (8) durch einen Spielraum zwischen dem nicht-rotierenden Element und einer stationären Halterung (2, 3) bestimmt ist.

3. Sonnenschutzvorrichtung gemäß Anspruch 2, wobei jede stationäre Halterung (2, 3) und jedes nicht-rotierende Element (8) durch eine Stift- und Lochvorrichtung (9, 10) zusammenwirken.

4. Sonnenschutzvorrichtung gemäß Anspruch 3, wobei zwei diametral positionierte Stift- und Lochvorrichtungen (9, 10) vorgesehen sind.

5. Sonnenschutzvorrichtung gemäß Anspruch 3 oder 4, wobei der Stift (9) von jeder Stift- und Lochvorrichtung Teil der stationären Halterung (2, 3) ist und das Loch (10) von jeder Stift- und Lochvorrichtung Teil des nicht-rotierenden Elementes (8) ist.

## Revendications

1. Ensemble pare-soleil comprenant un axe central fixe (1) monté avec ses extrémités opposées dans des montures fixes (2, 3), un axe d'enroulement (4) pour un pare-soleil (5) monté de manière rotative sur ledit axe central et au moins un élément formant ressort (7), pour contraindre l'axe d'enroulement dans une direction d'enroulement du pare-soleil sur cet axe, ledit élément formant ressort est raccordé par une première extrémité à l'axe d'enroulement et est raccordé par sa deuxième extrémité à un élément non rotatif (8), **caractérisé en ce que** deux éléments formant ressort (7) et deux éléments non rotatifs (8) sont placés à des extrémités opposées de l'axe d'enroulement (4), les éléments non rotatifs et l'axe d'enroulement pouvant dans une certaine limite être déplacés dans les deux directions longitudinales de l'axe central (1).

2. Ensemble pare-soleil selon la revendication 1, dans lequel ledit mouvement limité de chaque élément non rotatif (8) est déterminé par un jeu entre ledit élément non rotatif et une monture fixe (2, 3).

3. Ensemble pare-soleil selon la revendication 2, dans lequel chaque monture fixe (2, 3) et chaque élément non rotatif (8) coopèrent au moyen d'un ensemble de pion et de trou (9, 10).

4. Ensemble pare-soleil selon la revendication 3, dans lequel deux ensembles de pion et de trou (9, 10) placés dans des positions diamétrales sont fournis.

5. Ensemble pare-soleil selon la revendication 3 ou la revendication 4, dans lequel le pion (9) de chaque ensemble de pion et de trou fait partie de la monture fixe (2, 3) et le trou (10) de chaque ensemble de pion et de trou fait partie de l'élément non rotatif (8).
